# EUROPÄISCHE PATENTSCHRIFT

(11) **EP 3 326 852 B1**
(45) Veröffentlichungstag und Bekanntmachung des Hinweises auf die Patenterteilung: **05.02.2020**
(21) Anmeldenummer: 17197204.5
(22) Anmeldetag: 19.10.2017
(51) Int. Cl.: B60K 1/02, B60L 15/20

(54) **MOTORSTEUERUNG VON FAHRZEUGEN MIT MEHREREN E-MASCHINEN**
MOTOR CONTROL OF VEHICLES WITH MULTIPLE E-MOTORS
COMMANDE DE MOTEUR DES VÉHICULES À PLUSIEURS MOTEURS ÉLECTRIQUES

(30) Priorität: 24.11.2016 DE 102016223303
(43) Veröffentlichungstag der Anmeldung: 30.05.2018
(73) Patentinhaber: AUDI AG, 85045 Ingolstadt (DE)
(72) Erfinder: Schobeß, Nico, 85080 Gaimersheim (DE); Hammam, Mohamed, 85051 Ingolstadt (DE)

(56) Entgegenhaltungen:
- EP-A1- 2 218 603
- DE-C1- 19 932 118

## Beschreibung

Die Erfindung betrifft ein Verfahren zum Betreiben eines Antriebssystems eines Kraftfahrzeugs, das mindestens zwei E-Maschinen aufweist, das Antriebssystem, sowie ein das Antriebssystem aufweisendes Kraftfahrzeug.

Es gibt im Antriebsstrang heutiger elektrifizierter Fahrzeuge häufig mehr als eine elektrische Maschine. Dies trifft sowohl für rein elektrisch angetriebene Kraftfahrzeuge, sogenannte "battery electric vehicles" (BEV) zu als auch für Hybridfahrzeuge, z B. sogenannte "plug-in hybrid electric vehicles" (PHEV) oder sogenannte "mild hybrid electric vehicles" (MHEV). Die elektrischen Maschinen weisen dabei oft unterschiedliche Leistungscharakteristika auf und sind in der Regel im Antriebsstrang unterschiedlich angeordnet und verteilt. So kann beispielsweise ein riemengetriebener Starter-Generator (RSG) an einem Verbrennungsmotor vorhanden sein und eine weitere elektrische Maschine hinter dem Getriebe, an der Kurbelwelle, und/oder an der Hinterachse (TSG, ISG). Bei rein elektrisch angetriebenen Fahrzeugen können z.B. elektrische Maschinen an Vorder- und Hinterachse vorhanden sein. Die einzelnen elektrischen Maschinen werden oft in unterschiedlichen Betriebsbereichen eingesetzt, d.h. mit verschiedenen Drehmomenten und Drehzahlen. Dabei wird in der Regel jede elektrische Maschine für sich betrieben und es wird nicht die Gesamtheit der vorhandenen elektrischen Maschinen betrachtet. Dies kann zu einer verringerten Effizienz des Antriebs führen. Für Hybridfahrzeuge kann dies zu höherem Kraftstoffverbrauch und erhöhten Kohlendioxidemissionen führen. Auch wird das Potential der elektrischen Maschinen für die Energierekuperation und die Leistungsunterstützung des Verbrennungsmotors ("boost") nicht voll ausgeschöpft.

WO 2012/097349 A2 offenbart eine Vorrichtung und ein Verfahren zur Leistungsabgabeverteilung in einem Hybridantriebsstrang eines Hybridfahrzeugs. In einer Variante des Verfahrens erfolgt die Aufteilung einer Gesamtantriebsleistung zwischen einem Verbrennungsmotor und einem oder mehreren Elektromotoren des Hybridfahrzeugs unter Berücksichtigung von in einem aktuellen Betriebsmodus anfallenden Energiekosten.

Aus DE 10 2011 119 902 A1 ist ein Fahrzeugsystem bekannt, bei dem mehrere Antriebseinrichtungen, darunter eine elektrische Maschine, ein Drehmoment auf eine Kurbelwelle aufbringen. Es wird ein Verfahren zum Steuern eines Kraftmaschinendrehmoments vorgeschlagen, bei dem ein gewünschtes Gesamtmoment im Hybridantriebsstrang zwischen mehreren Antriebseinheiten aufgeteilt wird. Das Fahrzeugsystem wählt im Leerlaufbetrieb den Betriebsmodus aus mehreren Systemmodi aus, um ein Nettodrehmoment zu stabilisieren. In Abhängigkeit von einem aktuellen Wirkungsgrad des Umwandelns von zusätzlichem Kraftstoff in Elektrizität wird zwischen einem Auflademodus und einem Entlademodus umgeschaltet.

DE 10 2011 013 045 A1 lehrt ein Antriebssystem und ein Verfahren zur Steuerung des Antriebssystems, bei dem die Antriebssteuerung ein gewünschtes Gesamtantriebsmoment aus Einzelmomenten unterschiedlicher Momenten-Quellen zusammenstellt, die
Elektromotoren oder Verbrennungsmotoren sein können.

DE19932118 offenbart einen Mehrfach-Motoren-Antrieb, bei dem zwei Elektromotoren vorgesehen sind, die einem gemeinsamen Abtrieb mit zweistufigem Getriebe zugeordnet sind. Eine automatische Steuerung steuert einerseits die Lastverteilung zwischen den Motoren und andererseits das Getriebe, um einen optimalen Wirkungsgrad des Abtriebes zu gewährleisten.

Es bestand die Aufgabe, ein Verfahren zum Betreiben eines Antriebssystems eines Kraftfahrzeugs mit mindestens zwei E-Maschinen und ein entsprechendes Antriebssystem bereitzustellen, das eine verbesserte Energieeffizienz aufweist.

Die Aufgabe wird erfindungsgemäß gelöst durch ein Verfahren zum Betreiben eines Antriebssystems eines Kraftfahrzeugs mit den Merkmalen des Anspruchs 8. Ausführungsformen ergeben sich aus den abhängigen Ansprüchen, der Beschreibung und den begleitenden Zeichnungen. Das erfindungsgemäße Verfahren kombiniert den Betrieb der elektrischen Maschinen so miteinander, dass die geforderte mechanische Gesamtleistung des Fahrzeugs derart über die elektrischen Maschinen aufgeteilt wird, dass die Summe der Verlustleistungen minimiert wird oder der Wirkungsgrad der Gesamtheit der elektrischen Maschinen maximiert wird.

Außerdem wird ein Antriebssystem für ein Kraftfahrzeugs mit den Merkmalen des Anspruchs 1 vorgestellt, das mit dem erfindungsgemäßen Verfahren betrieben wird. Ausführungsformen ergeben sich aus den abhängigen Ansprüchen, der Beschreibung und den begleitenden Zeichnungen. Weiterhin betrifft die Erfindung ein Kraftfahrzeug mit einem erfindungsgemäßen Antriebssystem.

Das erfindungsgemäße Antriebssystem umfasst mindestens zwei elektrische Maschinen, die dafür konfiguriert sind, ein Drehmoment auf eine Achse oder ein Rad des Kraftfahrzeugs aufzubringen. Die Leistungsabgabe der elektrischen Maschinen wird durch mindestens eine Steuerungseinheit gesteuert. Die Steuerungseinheit regelt in einer Ausführungsform des Antriebssystems die Leistungsabgabe der elektrischen Maschinen über die Steuerung der Drehzahl jeder einzelnen elektrischen Maschine im Antriebssystem.

Das Antriebssystem umfasst außerdem mindestens eine Recheneinheit. In einer Ausführungsform der Erfindung dient die Recheneinheit zur Bestimmung der Verlustleistung der elektrischen Maschinen. In einer Ausführungsform ist hierzu für jede im Antriebssystem vorhandene elektrische Maschine ein Verlustkennfeld in der Recheneinheit hinterlegt, aus dem sich die Verlustleistung der elektrischen Maschine und zusätzliche Verluste von anderen Komponenten, die zur Leistungsübertragung von der E-Maschine benötigt werden, wie Elektronik, Getriebe, Achse etc., in Abhängigkeit von der Drehzahl und dem Drehmoment der elektrischen Maschine bestimmen lässt. In einer anderen Ausführungsform dient die Recheneinheit zur Bestimmung des Wirkungsgrades der elektrischen Maschinen. In einer Ausführungsform ist hierzu in der Recheneinheit für jede im Antriebssystem vorhandene elektrische Maschine ein Kennfeld hinterlegt, aus dem sich der Wirkungsgrad der elektrischen Maschine in Abhängigkeit von der Drehzahl und dem Drehmoment der elektrischen Maschine bestimmen lässt.

In einer Ausführungsform umfasst das erfindungsgemäße Antriebssystem ausschließlich elektrische Maschinen. In einer Ausführungsform umfasst das Antriebssystem mindestens eine elektrische Maschine, die an einem Getriebe, an einer Kurbelwelle, oder an einer Achse angeordnet ist. In einer weiteren Ausführungsform umfasst das Antriebssystem zusätzlich mindestens einen Verbrennungsmotor; das Fahrzeug ist also ein Hybridfahrzeug. In einer Ausführungsform umfasst das Antriebssystem des Hybridfahrzeugs mindestens einen riemengetriebenen Startergenerator.

Die Erfindung betrifft auch ein Verfahren zum Betrieb eines Antriebssystems für ein Kraftfahrzeug, das mindestens zwei elektrische Maschinen aufweist, welche dafür konfiguriert sind, ein Drehmoment auf eine Achse oder ein Rad des Kraftfahrzeugs aufzubringen. Das Verfahren umfasst die nachfolgenden Schritte.

Zunächst wird festgelegt, wie groß die mechanische Antriebsleistung insgesamt sein soll, die von der Gesamtheit der elektrischen Maschinen auf die Räder oder Achsen des Kraftfahrzeugs aufgebracht wird. Dies kann beispielsweise eine zur Unterstützung einer Beschleunigung gewünschte Antriebsleistung sein oder eine bei einer Verzögerung des Fahrzeugs zur Energierückgewinnung durch Generatorbetrieb zur Verfügung stehende Leistung.

In einem zweiten Schritt wird gemäß einer möglichen Ausführungsform die festgelegte mechanische Leistung dann so auf die einzelnen elektrischen Maschinen aufgeteilt, dass die Summe der Verlustleistungen der elektrischen Maschinen minimiert wird. In einer Ausführungsform wird die Verlustleistung jeder elektrischen Maschine aus einem im Antriebssystem hinterlegten Verlustkennfeld der elektrischen Maschine ermittelt, aus dem sich die Verlustleistung der elektrischen Maschine und zusätzliche Verluste von anderen Komponenten, die zur Leistungsübertragung von der E-Maschine benötigt werden, wie Elektronik, Getriebe, Achse etc., in Abhängigkeit von der Drehzahl und dem Drehmoment der elektrischen Maschine bestimmen lässt.

In einer anderen Ausführungsform wird in dem zweiten Schritt die festgelegte mechanische Leistung so auf die einzelnen elektrischen Maschinen aufgeteilt, dass der Wirkungsgrad der Gesamtheit der elektrischen Maschinen maximiert wird. In einer Ausführungsform wird der Wirkungsgrad jeder elektrischen Maschine aus einem im Antriebssystem hinterlegten Kennfeld der elektrischen Maschine ermittelt, aus dem sich der Wirkungsgrad der elektrischen Maschine in Abhängigkeit von der Drehzahl und dem Drehmoment der elektrischen Maschine bestimmen lässt.

Gemäß der ermittelten Leistungsverteilung werden dann die elektrischen Maschinen des Antriebssystems angesteuert, so dass die Gesamtheit der elektrischen Maschinen die festgelegte mechanische Antriebsleistung erbringt. Die Leistungsverteilung erfolgt in einer Ausführungsform über die Regelung des Drehmoments der einzelnen elektrischen Maschinen.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Im Folgenden wird die Erfindung anhand eines Ausführungsbeispiels und unter Bezugnahme auf die Zeichnungen weiter erläutert. Es zeigt:
- Figur 1: ein Fahrzeug mit einer Ausführungsform des erfindungsgemäßen Antriebssystems in schematisierter Darstellung,
- Figur 2: Kennfelder der in Figur 1 enthaltenen elektrischen Maschinen.

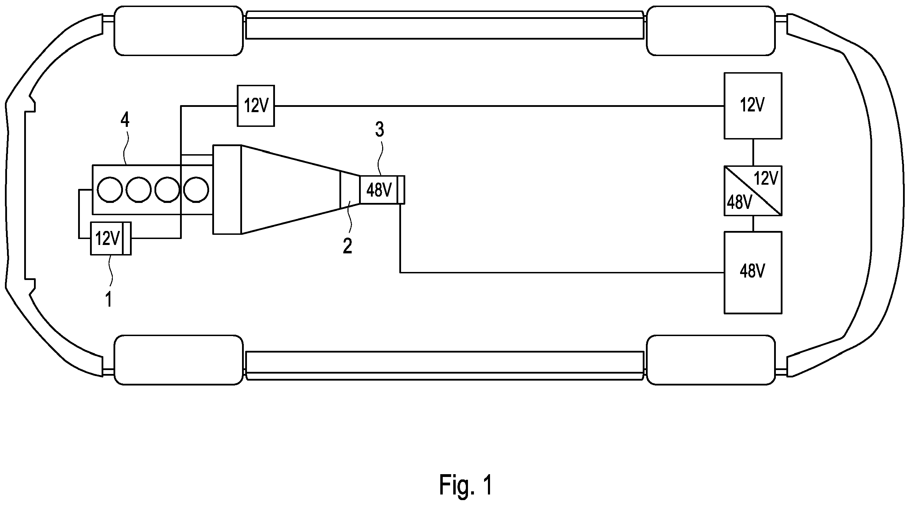

Das in Figur 1 schematisch dargestellte Antriebssystem umfasst zwei elektrische Maschinen (E-Maschinen): eine erste elektrische Maschine 1, die als riemengetriebener Startergenerator (RSG) ausgeführt ist und an einem Verbrennungsmotor 4 angeordnet ist; und eine zweite elektrische Maschine 3, die hinter dem Getriebe 2 angeordnet ist (TSG). Nicht dargestellt sind die Steuerungseinheit für die elektrischen Maschinen und die Recheneinheit, die die Leistungsverteilung zwischen den beiden elektrischen Maschinen 1 und 3 ermittelt. Im Beispiel ist die Kombination von 12V- und 48V-Bordnetzen dargestellt. Das erfindungsgemäße Antriebssystem ist jedoch nicht auf bestimmte Bordnetzspannungen beschränkt. Es können beispielsweise auch ein reines 48V-Bordnetz oder ein HV-Bordnetz eingesetzt werden.

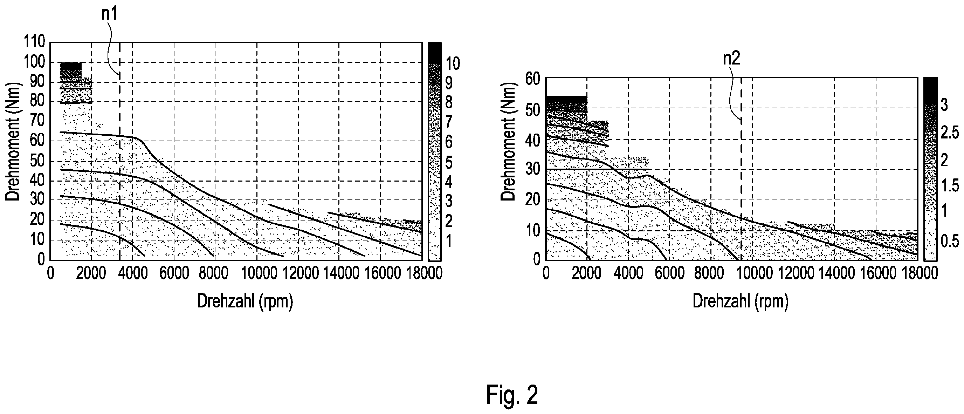

Für eine vorgegebene Gesamtleistung wird aus den in Figur 2 dargestellten Kennfeldern für vorgegebene Drehmomente M (Ordinate) bei verschiedenen Drehzahlen n (Abszisse) die jeweilige Verlustleistung bestimmt. In Figur 2 ist links das Kennfeld der ersten elektrischen Maschine 1 dargestellt. Die gestrichelte Linie entspricht einer Drehzahl n1 der ersten elektrischen Maschine 1. Rechts in Figur 2 ist das Kennfeld der zweiten elektrischen Maschine 3 dargestellt. Die gestrichelte Linie entspricht einer Drehzahl n2 der zweiten elektrischen Maschine 3.

Über eine Suchfunktion werden die Drehmomente so ausgewählt, dass die Summe der Leistungsabgabe der beiden E-Maschinen 1 und 3 der vorgegebenen Gesamtleistung entspricht und zudem die Summe der Verlustleistungen der beiden E-Maschinen 1 und 3 minimal wird.

Es gilt P=(M1^{∗}n1+M2^{∗}n2) und P_{v_tot} = P_{v_1}+P_{v_2}, worin P die Gesamtleistung der beiden E-Maschinen bedeutet, M1 das Drehmoment der ersten E-Maschine 1, M2 das Drehmoment der zweiten E-Maschine 3, P_{v_tot} die gesamte Verlustleistung der beiden E-Maschinen inklusive zusätzlicher Verluste von anderen Komponenten, die zur Leistungsübertragung von der E-Maschine benötigt werden, wie Elektronik, Getriebe, Achse etc., ist, die sich als Summe der Verlustleistungen P_{v_1} und P_{v_2} der ersten und der zweiten E-Maschine ergibt.

Im Fahrbetrieb kombiniert das erfindungsgemäße Verfahren den Betrieb der beiden E-Maschinen so miteinander, dass die geforderte mechanische Gesamtleistung des Fahrzeugs über die beiden E-Maschinen aufgeteilt wird. Das führt dazu, dass die Gesamtverluste durch die Wahl der optimalen Betriebspunkte (im Bereich besseren Wirkungsgrads) beider E-Maschinen minimiert werden. Somit wird durch die Kombination im Antriebsstrang der beste Wirkungsgrad erreicht bzw. es wird die Gesamtverlustleistung der E-Maschinen minimiert. Dadurch wird eine Effizienzsteigerung im Antriebsstrang erzielt, der CO₂-Ausstoß verringert, und das Potential der E-Maschinen für Rekuperation und Boost wird optimal ausgeschöpft.

### Bezugszeichenliste

- 1:: riemengetriebener Startergenerator (RSG)
- 2:: Getriebe
- 3:: getriebemontierter Generator (TSG)
- 4:: Verbrennungsmotor

## Patentansprüche

1. Antriebssystem für ein Kraftfahrzeug , umfassend mindestens zwei elektrische Maschinen (1, 3), die dafür konfiguriert sind, ein Drehmoment auf eine Achse oder ein Rad des Kraftfahrzeugs aufzubringen;
mindestens eine Recheneinheit, welche dafür eingerichtet ist, eine Verteilung einer festgelegten mechanischen Antriebsleistung, die von der Gesamtheit der elektrischen Maschinen (1,3) auf die Räder oder Achsen des Kraftfahrzeugs aufgebracht werden soll, auf die einzelnen elektrischen Maschinen (1,3) zu ermitteln; und
mindestens eine Steuerungseinheit zur Steuerung der Leistungsabgabe der elektrischen Maschinen (1, 3), welche dafür eingerichtet ist, die elektrischen Maschinen (1,3) gemäß der ermittelten Leistungsverteilung anzusteuern, so dass die Gesamtheit der elektrischen Maschinen (1,3) die festgelegte mechanische Antriebsleistung erbringt;
**dadurch gekennzeichnet, dass** das Antriebssystem zusätzlich mindestens einen Verbrennungsmotor umfasst; und das Antriebssystem mindestens eine elektrische Maschine (1, 3) aufweist, die an einem Getriebe, an einer Kurbelwelle, oder an einer Achse angeordnet ist, und mindestens einen riemengetriebenen Startergenerator (1) umfasst;
und dass die Recheneinheit dafür eingerichtet ist, die Verlustleistung der elektrischen Maschinen (1, 3) aus einem im Antriebssystem hinterlegten Verlustkennfeld zu ermitteln, aus dem sich die Verlustleistung einer elektrischen Maschine (1, 3) inklusive zusätzlicher Verluste von anderen Komponenten, die zur Leistungsübertragung von der E-Maschine (1, 3) benötigt werden, in Abhängigkeit von der Drehzahl und dem Drehmoment der elektrischen Maschine (1, 3) bestimmen lässt; und eine Verteilung einer festgelegten mechanischen Leistung, die von der Gesamtheit der elektrischen Maschinen (1, 3) auf die Räder oder Achsen des Kraftfahrzeugs aufgebracht werden soll, auf die einzelnen elektrischen Maschinen (1, 3) zu ermitteln, bei der die Summe der Verlustleistungen der elektrischen Maschinen (1, 3) minimiert wird.

2. Antriebssystem nach Anspruch 1, bei dem die Steuerung der Leistungsabgabe der elektrischen Maschinen (1, 3) über die Regelung des Drehmoments der elektrischen Maschinen (1, 3) erfolgt.

3. Verfahren zum Betrieb eines Antriebssystems für ein Kraftfahrzeug mit mindestens zwei elektrischen Maschinen (1,3), welche dafür konfiguriert sind, ein Drehmoment auf eine Achse oder ein Rad des Kraftfahrzeugs aufzubringen, wobei das Antriebssystem zusätzlich mindestens einen Verbrennungsmotor umfasst und mindestens eine elektrische Maschine (1, 3) aufweist, die an einem Getriebe, an einer Kurbelwelle, oder an einer Achse angeordnet ist, und mindestens einen riemengetriebenen Startergenerator (1) umfasst; umfassend die Schritte:
a) Festlegen einer mechanischen Antriebsleistung, die von der Gesamtheit der elektrischen Maschinen (1, 3) auf die Räder oder Achsen des Kraftfahrzeugs aufgebracht werden soll;
b) Aufteilen der mechanischen Leistung auf die einzelnen elektrischen Maschinen (1, 3), so dass die Summe der Verlustleistungen der elektrischen Maschinen (1, 3) minimiert wird;
c) Ansteuern der elektrischen Maschinen (1, 3) gemäß der ermittelten Leistungsverteilung, so dass die Gesamtheit der elektrischen Maschinen (1, 3) die festgelegte mechanische Antriebsleistung erbringt;
**dadurch gekennzeichnet, dass** die Verlustleistung jeder elektrischen Maschine (1, 3) aus einem im Antriebssystem hinterlegten Verlustkennfeld ermittelt wird, aus dem sich die Verlustleistung der elektrischen Maschine (1, 3) inklusive zusätzlicher Verluste von anderen Komponenten, die zur Leistungsübertragung von der E-Maschine (1, 3) benötigt werden, in Abhängigkeit von der Drehzahl und dem Drehmoment der elektrischen Maschine (1, 3) bestimmen lässt.

4. Verfahren nach Anspruch 3, bei dem die Leistungsverteilung über die Regelung des Drehmoments der einzelnen elektrischen Maschinen (1, 3) gesteuert wird.

5. Kraftfahrzeug mit einem Antriebssystem nach Anspruch 1 oder 2.

## Claims

1. Drive system for a motor vehicle, comprising at least two electric machines (1, 3), which are configured to apply a torque to an axle or a wheel of the motor vehicle;
at least one computer unit, which is configured to determine a distribution of a specified mechanical drive power, which is to be applied by the totality of the electric machines (1, 3) to the wheels or axles of the motor vehicle, to the individual electric machines (1, 3); and
at least one control unit for controlling the power output of the electric machines (1, 3), which is configured to control the electric machines (1, 3) according to the determined power distribution, so that the totality of the electric machines (1, 3) produces the specified mechanical drive power;
**characterised in that** the drive system additionally comprises at least one internal combustion engine; and the drive system has at least one electric machine (1, 3), which is arranged on a transmission, on a crankshaft or on an axle, and comprises at least one belt-driven starter generator (1);
and that the computer unit is configured to determine the power loss of the electric machines (1, 3) from a loss characteristic diagram stored in the drive system, from which the power loss of an electric machine (1, 3) including additional losses by other components, which are required for the power transmission from the electric machine (1, 3), can be determined as a function of the speed and the torque of the electric machine (1, 3); and to determine a distribution of a specified mechanical power, which is to be applied by the totality of the electric machines (1, 3) to the wheels or axles of the motor vehicle, to the individual electric machines (1, 3), in which the sum of the power losses of the electric machines (1, 3) is minimised.

2. Drive system according to claim 1, in which the control of the power output of the electric machines (1, 3) takes place via the regulation of the torque of the electric machines (1, 3).

3. Method for operating a drive system for a motor vehicle having at least two electric machines (1, 3), which are configured to apply a torque to an axle or a wheel of a motor vehicle, wherein the drive system additionally comprises at least one internal combustion engine and has at least one electric machine (1, 3), which is arranged on a transmission, on a crankshaft, or on an axle, and comprises at least one belt-driven starter generator (1); comprising the steps:
a) Specification of a mechanical drive power, which to be applied by the totality of the electric machines (1, 3) to the wheels or axles of the motor vehicle;
b) Division of the mechanical power between the individual electric machines (1, 3), so that the sum of the power losses of the electric machines (1, 3) is minimised;
c) Control of the electric machines (1, 3) according to a determined power distribution, so that the totality of the electric machines (1, 3) produces the specified mechanical drive power;
**characterised in that** the power loss of each electric machine (1, 3) is determined from a loss characteristic diagram stored in the drive system, from which the power loss of the electric machine (1, 3) including additional losses of other components, which are required for the power distribution of the electric machine (1, 3), can be determined as a function of the speed and the torque of the electric machine 1, 3).

4. Method according to claim 3, in which the power distribution is controlled via the regulation of the torque of the individual electric machines (1, 3).

5. Motor vehicle with a drive system according to claim 1 or 2.

## Revendications

1. Système d'entraînement pour un véhicule automobile, comprenant au moins deux machines électriques (1, 3) qui sont configurées afin d'appliquer un couple à un essieu ou une roue du véhicule automobile ;
au moins une unité informatique qui est aménagée afin de déterminer une distribution d'une puissance d'entraînement mécanique fixée qui doit être appliquée par l'intégralité des machines électriques (1,3) sur les roues ou essieux du véhicule automobile, sur les machines électriques individuelles (1,3) ; et
au moins une unité de commande pour la commande de la puissance absorbée des machines électriques (1, 3) qui est aménagée afin de commander les machines électriques (1,3) selon la distribution de puissance déterminée de sorte que l'intégralité des machines électriques (1,3) fournisse la puissance d'entraînement mécanique déterminée ;
**caractérisé en ce que** le système d'entraînement comprend en outre au moins un moteur à combustion ; et le système d'entraînement présente au moins une machine électrique (1, 3) qui est agencée au niveau d'une transmission, au niveau d'un vilebrequin, ou au niveau d'un essieu, et comprend au moins un générateur de démarrage entraîné par courroie (1) ;
et que l'unité informatique est aménagée afin de déterminer la puissance de perte des machines électriques (1, 3) à partir d'un champ caractéristique de perte enregistré dans le système d'entraînement, à partir duquel la puissance de perte d'une machine électrique (1, 3) peut se déterminer, y compris des pertes supplémentaires d'autres composants qui sont nécessaires à la transmission de puissance de la E-machine (1, 3), en fonction de la vitesse et du couple de la machine électrique (1, 3) ; et de déterminer une distribution d'une puissance mécanique fixée qui doit être appliquée par l'intégralité des machines électriques (1, 3) sur les roues ou essieux du véhicule automobile, sur les machines électriques individuelles (1, 3), pour laquelle la somme des puissances de perte des machines électriques (1, 3) est minimisée.

2. Système d'entraînement selon la revendication 1, pour lequel la commande de la puissance absorbée des machines électriques (1, 3) est effectuée par le biais de la régulation du couple des machines électriques (1, 3).

3. Procédé de fonctionnement d'un système d'entraînement pour un véhicule automobile avec au moins deux machines électriques (1, 3) qui sont configurées afin d'appliquer un couple sur un essieu ou une roue du véhicule automobile, dans lequel le système d'entraînement comprend en outre au moins un moteur à combustion et présente au moins une machine électrique (1, 3) qui est agencée au niveau d'une transmission, au niveau d'un vilebrequin, ou au niveau d'un essieu, et comprend au moins un générateur de démarrage entraîné par courroie (1) ; comprenant les étapes :
a) la fixation d'une puissance d'entraînement mécanique qui doit être appliquée par l'intégralité des machines électriques (1, 3) sur les roues ou essieux du véhicule automobile ;
b) la division de la puissance mécanique sur les machines électriques individuelles (1, 3) de sorte que la somme des puissances de perte des machines électriques (1, 3) soit minimisée ;
c) la commande des machines électriques (1, 3) selon la distribution de puissance déterminée de sorte que l'intégralité des machines électriques (1, 3) fournisse la puissance d'entraînement mécanique fixée ;
**caractérisé en ce que** la puissance de perte de chaque machine électrique (1, 3) est déterminée à partir d'un champ caractéristique de perte enregistré dans le système d'entraînement, à partir duquel la puissance de perte de la machine électrique (1, 3) peut se déterminer, y compris des pertes supplémentaires d'autres composants qui sont nécessaires pour la transmission de puissance de la E-machine (1, 3), en fonction de la vitesse et du couple de la machine électrique (1, 3).

4. Procédé selon la revendication 3, pour lequel la distribution de puissance est commandée par le biais de la régulation du couple des machines électriques individuelles (1, 3).

5. Véhicule automobile avec un système d'entraînement selon la revendication 1 ou 2.
